# EUROPÄISCHE PATENTSCHRIFT

(11) **EP 0 529 112 B1**
(45) Veröffentlichungstag und Bekanntmachung des Hinweises auf die Patenterteilung: **23.08.1995**
(21) Anmeldenummer: 91114039.0
(22) Anmeldetag: 22.08.1991
(51) Int. Cl.: G03B 23/04

(54) **Diamagazin**
Slide magazine
Magasin de diapositives

(43) Veröffentlichungstag der Anmeldung: 03.03.1993
(73) Patentinhaber: REFLECTA GMBH FOTO FILM PROJEKTION, D-91126 Schwabach (DE)
(72) Erfinder: Kronbauer, Hermann, W-8011 Aschheim (DE); Rehm, Christian, W-8000 München 82 (DE)
(74) Vertreter: LOUIS, PÖHLAU, LOHRENTZ & SEGETH

(56) Entgegenhaltungen:
- DE-A- 1 901 091
- FR-A- 1 524 772
- GB-A- 2 094 498

## Beschreibung

Die Erfindung betrifft ein Diamagazin mit einer Basis und mit von der Basis nach oben wegstehenden Trennwänden, die voneinander beabstandet sind und Abteile zur Aufnahme je eines Diarähmchens bilden, wie z.B. aus GB-A-2 094 498 bekannt..

Derartige Diamagazine sind nur zur einseitigen Entnahme von Diarähmchen geeignet, weil die die einzelnen Abteile für Diarähmchen begrenzenden Trennwände auf der einen Längsseite des Diamagazins mittels einer Seitenwand miteinander verbunden sind, die sich von der Basis des Diamagazins nach oben erstreckt, wobei die Höhe dieser Seitenwand nur unwesentlich niedriger ist als die Höhe jeder Trennwand über der Basis. Bei diesen bekannten Diamagazinen weisen die einzelnen Trennwände voneinander einen solchen Abstand auf, dass die Diamagazine für beliebige Diarähmchen genormter Dicke geeignet sind. Ein erheblicher Mangel dieser bekannten Diamagazine besteht darin, dass in ihnen die Diarähmchen nicht verschüttsicher angeordnet sind.

Der Erfindung liegt die Aufgabe zugrunde, ein Diamagazin der eingangs genannten Art zu schaffen, das zur Aufnahme und Lagerung aller üblichen Diarähmchen genormter Dicke geeignet sind, wobei die Diarähmchen im Diamagazin verschüttsicher anordbar und einfach aus dem Diamagazin entnehmbar sind.

Diese Aufgabe wird erfindungsgemäss dadurch gelöst, dass die Trennwände eine an die Diarähmchen angepasste Höhe aufweisen und an ihrem von der Basis entfernten Ende zum Sichern eines in einem Abteil befindlichen Diarähmchens gegen Herausfallen miteinander durch ein streifenförmiges Halteelement verbunden sind, das sich über die Länge des Diamagazins erstreckt, dass jedes Abteil von seinen beiden Seiten mit einem Diarähmchen bestückbar bzw. entleerbar ist, und dass zum Sichern des in einem Abteil befindlichen Diarähmchens gegen seitliches Herausfallen an jeder Seite jedes Abteils mindestens ein federndes Halteelement vorgesehen ist. Das entsprechende federnde Halteelement kann hierbei z.B. an der das entsprechende Abteil begrenzenden Trennwand, d.h. an deren beiden Seitenrändern vorgesehen sein. Ein einfach herzustellendes Diamagazin ergibt sich, wenn an den beiden voneinander entfernten Endabschnitten des Bodens jedes Abteils an der Basis federnde Finger ausgebildet sind, die in entgegengesetzte Richtungen seitlich wegstehen und an ihren voneinander abgewandten Enden mit nach oben stehenden Haltenasen zum Halten eines entsprechenden Diarähmchens ausgebildet sind. Die beiden Haltenasen eines Abteils weisen hierbei voneinander einen Abstand auf, der der Länge einer Randkante des einen quadratischen Umfangsrand besitzenden Diarähmchens entspricht.

Durch geeignete Ausbildung der federnden Finger ist es möglich, passende Federungseigenschaften zu gewährleisten, durch welche auch nach einer langen Benutzungsdauer des Diamagazins eine sichere Halterung eines Diarähmchens in einem Abteil des Diamagazins zwischen den federnden Halteelementen bzw. den von den federnden Fingern nach oben stehenden Haltenasen und dem oberseitigen streifenförmigen Halteelement gegeben ist. Zum einen sind derartige Finger relativ einfach ausbildbar und zum anderen ergibt sich hierdurch eine ausreichend grosse Federkraft, um mit Hilfe der federnden Finger bzw. der von diesen nach oben stehenden Haltenasen das in einem Abteil befindliche Diarähmchen gegen das oberseitige streifenförmige Halteelement mit einer solchen Kraft zu drücken, dass das entsprechende Diarähmchen an einem ungewollten Herausfallen aus dem Diamagazin gehindert ist, wobei das Diarähmchen jedoch durch Einwirkung einer bestimmten Kraft auf das entsprechende Diarähmchen, wie sie durch die Greif- und Entnahmeeinrichtung eines Diaprojektors gegeben ist, problemlos aus dem Diamagazin entnommen werden kann. Das erfindungsgemässe Diamagazin eignet sich durch passende Ausbildung seiner Basis sowohl zum Einsatz in herkömmlichen Diaprojektoren, bei welchen die Diarähmchen aus dem Diamagazin nur einseitig entnommen werden, das erfindungsgemässe Diamagazin ist jedoch insbes. zur Anwendung in Verbindung mit einem neuartigen Diaprojektor vorgesehen, der mit zwei Greif- bzw. Entnahmeeinrichtungen ausgebildet ist, um Diarähmchen sowohl von der einen als auch von der gegenüberliegenden anderen Seite aus dem Diamagazin entnehmen und wieder im Diamagazin anordnen zu können. Bei diesen Diaprojektoren handelt es sich insbes. um Diaprojektoren mit Überblendtechnik.

Eine symmetrische Ausbildung des Diamagazins ist vorteilhaft um die Gefahr von Produktionsausschuss infolge ungleichmässiger Formung bzw. Aushärtung des Kunststoffmaterials, aus welchem derartige Diamagazine bestehen, zu minimieren. Zu diesem Zweck ist es vorteilhaft, wenn das oberseitige streifenförmige Halteelement sich mittig in Längsrichtung des Diamagazins erstreckt und in Querrichtung des Diamagazins eine Breite besitzt, die im Vergleich zur Querabmessung des Diamagazins klein ist. Durch eine solche Dimensionierung ist es problemlos möglich, das streifenförmige Halteteil mit entsprechenden Formschiebern im Diamagazin-Formwerkzeug herzustellen, wobei diese Formschieber in der Basis bzw. im Boden jedes Abteils eine entsprechende Aussparung freilassen. Durch diese Aussparungen im Boden jedes Abteils ergibt sich ausserdem nicht nur eine Materialeinsparung sondern gleichzeitig auch eine Gewichtsreduktion des Diamagazins. Demselben Zweck dient es, wenn jede Trennwand in der Nachbarschaft der Basis des Diamagazins eine der Basis entsprechende Querabmessung aufweist und wenn jede Trennwand zum oberseitigen streifenförmigen Rückhalteelement hin verjüngt ist. Dadurch ergibt sich insgesamt ein formstabiles, von beiden Seiten bestückbares bzw. beidseitig entnehmbares Diamagazin und eine gute Zugänglichkeit zu den Diarähmchen.

Weitere Einzelheiten, Merkmale und Vorteile ergeben sich aus der nachfolgenden Beschreibung eines in der Zeichnung abschnittweise dargestellten Ausführungsbeispieles des erfindungsgemässen Diamagazins. Es zeigt:
- Fig. 1: eine räumliche Darstellung eines Endabschnittes des Diamagazins, wobei ein Abteil ohne und das durchgeschnitten gezeichnete Abteil mit einem Diarähmchen gezeichnet ist,
- Fig. 2: eine Draufsicht auf den Abschnitt des Diamagazins gemäss Fig. 1 in Blickrichtung des Pfeiles II,
- Fig. 3: eine Ansicht des Abschnittes des Diamagazins gem. Fig. 1 in Blickrichtung des Pfeiles III von der Seite, und
- Fig. 4: eine Ansicht des durchgeschnitten gezeichneten Endabschnittes des Diamagazins gemäss Fig. 1 in Blickrichtung des Pfeiles IV von vorne.

Die Figuren zeigen einen Endabschnitt des Diamagazins 10 mit einigen Trennwänden 12, die von einer Basis 14 des Diamagazins 10 nach oben stehen. Zwischen benachbarten Trennwänden 12 ist jeweils ein Abteil 16 festgelegt, das zur Aufnahme und Halterung eines Diarähmchens 18 geeignet ist.

Die Basis 14 weist Längselemente 20, 22, 24 und 26 auf, wobei das Längselement 24 als Zahnstange zum Antrieb des Diamagazins 10 ausgebildet ist.

Die Trennwände 12 weisen voneinander einen derartigen Abstand auf, dass das Diamagazin 10 zur Aufnahme jedes beliebigen herkömmlichen Diarähmchens 18 genormter Wanddicke geeignet ist.

Wie insbes. aus Fig. 4 deutlich ersichtlich ist, weisen die Trennwände 12 eine Höhe auf, die an die Länge der Randkante des quadratischen Diarähmchens 18 angepasst ist. Die Trennwände 12 sind an ihrem von der Basis 14 entfernten Ende miteinander durch ein streifenförmiges Halteelement 28 verbunden. Durch das streifenförmige Halteelement 28 werden die in Abteilen 16 befindlichen Diarähmchen 18 an einem Herausfallen aus dem Diamagazin gehindert. Aus Fig. 4 ist auch ersichtlich, dass das Diamagazin 10 von seinen beiden Seiten mit Diarähmchen 18 bestückbar ist, bzw. dass die Diarähmchen 18 beidseitig aus dem Diamagazin 10 entnehmbar sind. Zum Sichern jedes Diarähmchens 18 gegen ungewolltes seitliches Herausfallen aus dem entsprechenden Abteil 16 des Diamagazins 10 ist an jeder Seite jedes Abteils 16 ein federndes Halteelement 30 vorgesehen. Bei dem in den Figuren gezeichneten Diarähmchen 10 sind die federnden Halteelemente 30 durch federnde Finger 32 gebildet, die vom Boden 34 jedes Abteils 16 in entgegengesetzte Richtungen seitlich wegstehen und an ihrer Oberseite mit Haltenasen 36 ausgebildet sind. Die beiden Haltenasen 36 jedes Abteils 16 weisen voneinander einen Abstand auf, welcher der Länge der Randkante 38 des quadratischen Diarähmchens 18 entspricht.

Zur Ausformung der federnden Finger 32 mit den Haltenasen 36 sind zwischen den Längselementen 20 und 22 durch entsprechende Formschieber bedingte Aussparungen 40 und seitlich neben dem Längselement 26 Aussparungen 42 ausgebildet. Entsprechend sind zur Ausformung des oberseitigen streifenförmigen Halteelementes 28 im Boden 34 Aussparungen 44 ausgebildet, die durch die entsprechenden Formschieber des Formwerkzeugs zur Herstellung des Diamagazins 10 bedingt sind.

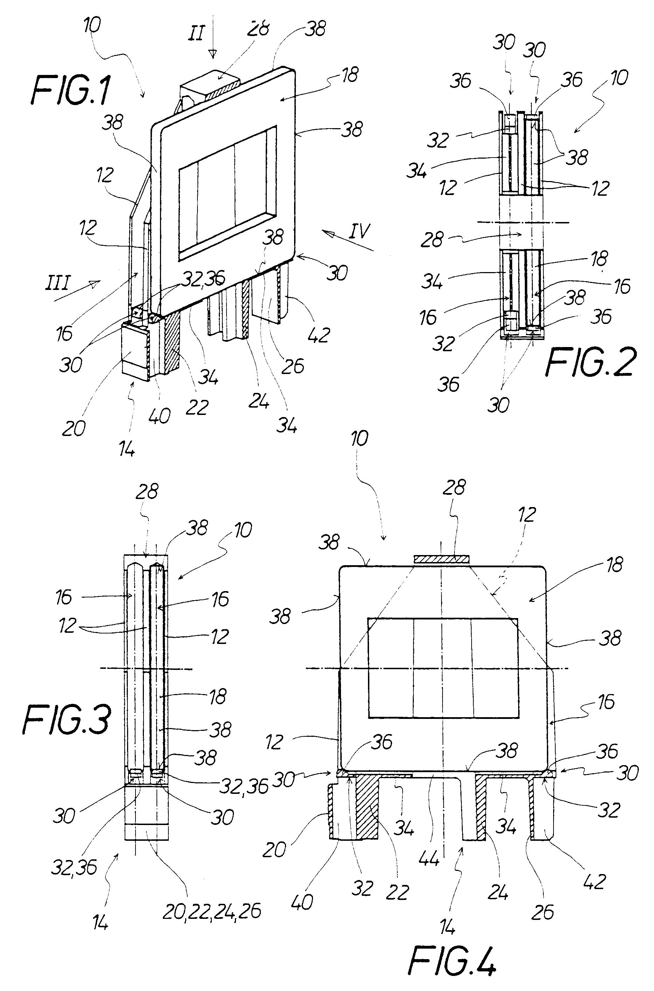

Aus Fig. 4 ist ausserdem deutlich ersichtlich, dass die federnden Finger 32 im Vergleich zur Querabmessung des Diamagazins 10 eine kleine Länge besitzen. Die Figuren 1 und 4 verdeutlichen ferner, dass jede Trennwand 12 in der Nachbarschaft der Basis 14 eine der Basis 14 entsprechende Querabmessung aufweist und dass jede Trennwand 12 zum oberseitigen streifenförmigen Halteelement 28 hin verjüngt ausgebildet ist.

In den Figuren 1 bis 4 sind gleiche Einzelheiten jeweils mit denselben Bezugsziffern bezeichnet, so dass es sich erübrigt, alle diese Einzelheiten in Verbindung mit den einzelnen Figuren jeweils detailliert zu beschreiben.

## Patentansprüche

1. Diamagazin mit einer Basis (14) und mit von der Basis (14) nach oben wegstehenden Trennwänden (12), die voneinander beabstandet sind und Abteile (16) zur Aufnahme je eines Diarähmchens (18) bilden,
**dadurch gekennzeichnet,**
dass die Trennwände (12) eine an die Diarähmchen (18) angepasste Höhe aufweisen und an ihrem von der Basis (14) entfernten Ende zum Sichern eines in einem Abteil (16) befindlichen Diarähmchens (18) gegen Herausfallen miteinander durch ein streifenförmiges Halteelement (28) verbunden sind, das sich über die Länge des Diamagazins (10) erstreckt, dass jedes Abteil (16) von seinen beiden Seiten mit einem Diarähmchen (18) bestückbar bzw. entleerbar ist, und dass zum Sichern des in einem Abteil (16) befindlichen Diarähmchens (18) gegen seitliches Herausfallen an jeder Seite jedes Abteils (16) mindestens ein federndes Halteelement (30) vorgesehen ist.

2. Diamagazin nach Anspruch 1,
**dadurch gekennzeichnet,**
dass an den beiden voneinander entfernten Endabschnitten des Bodens (34) jedes Abteils (16) zur Ausbildung der Halteelemente (30) an der Basis (14) federnde Finger (32) ausgebildet sind, die in entgegengesetzte Richtungen seitlich wegstehen und an ihren voneinander abgewandten Enden mit nach oben stehenden Haltenasen (36) zum Halten eines entsprechenden Diarähmchens (18) ausgebildet sind.

3. Diamagazin nach Anspruch 1,
**dadurch gekennzeichnet,**
dass das oberseitige streifenförmige Halteelement (28) sich mittig in Längsrichtung des Diamagazins (10) erstreckt und in Querrichtung des Diamagazins (10) eine Breite besitzt, die im Vergleich zur Querabmessung des Diamagazins (10) klein ist.

4. Diamagazin nach einem der vorhergehenden Ansprüche,
**dadurch gekennzeichnet,**
dass jede Trennwand (12) in der Nachbarschaft der Basis (14) des Diamagazins (10) eine der Basis (14) entsprechende Querabmessung aufweist und zum oberseitigen streifenförmigen Halteelement (28) hin verjüngt ist.

## Claims

1. Slide magazine having a base (14) and having partitions (12) which project upwards away from the base (14), are spaced apart, and form compartments (16) for receiving a slide frame (18) in each case, characterized in that the partitions (12) have a height which is adapted to the slide frames (18) and, to secure a slide frame (18) located in a compartment (16) from dropping out, are connected to one another at their end which is remote from the base (14) by means of a strip-shaped holding element (28) which extends over the length of the slide magazine (10); in that each compartment (16) can be loaded with a slide frame (18) or emptied from both its sides; and in that at least one resilient holding element (30) is provided on each side of each compartment (16) to secure the slide frame (18) located in a compartment (16) from dropping out laterally.

2. Slide magazine according to Claim 1, characterized in that resilient fingers (32) are formed at the two end sections, remote from one another, of the bottom (34) of each compartment (16) to form the holding elements (30) at the base (14), which fingers project laterally in opposite directions and are formed, at their ends facing away from one another, with upwardly disposed holding lugs (36) for holding a corresponding slide frame (18).

3. Slide magazine according to Claim 1, characterized in that the strip-shaped holding element (28) at the top extends centrally in the longitudinal direction of the slide magazine (10) and has a width, in the transverse direction of the slide magazine (10), which is small compared to the transverse dimension of the slide magazine (10).

4. Slide magazine according to one of the preceding claims, characterized in that, in the vicinity of the base (14) of the slide magazine (10), each partition (12) has a transverse dimension corresponding to the base (14) and is tapered towards the strip-shaped holding element (28) at the top.

## Revendications

1. Chargeur de diapositives comprenant une base (14) et des parois séparatrices (12) qui font saillie vers le haut à partir de la base (14), sont disposées à distance l'une de l'autre et forment des compartiments (16) destinés à recevoir chacun un cadre de diapositive (18), caractérisé en ce que les parois séparatrices (12) présentent une hauteur adaptée aux cadres de diapositive (18) et sont, à leur extrémité éloignée de la base (14), mutuellement reliées, pour assurer contre toute chute un cadre de diapositive (18) situé dans un compartiment (16), par un élément de retenue (28) en forme de bande qui s'étend sur la longueur du chargeur de diapositives (10), en ce que chaque compartiment (16) peut être chargé d'un cadre de diapositive (18) ou respectivement vidé de celui-ci par ses deux côtés et en ce que, pour assurer le cadre de diapositive (18) situé dans un compartiment (16) contre toute chute latérale, au moins un élément de retenue élastique (30) est prévu de chaque côté de chaque compartiment (16).

2. Chargeur de diapositives suivant la revendication 1, caractérisé en ce que des doigts élastiques (32), qui font saillie latéralement dans des sens opposés et qui sont, à leurs extrémités mutuellement opposées, pourvus d'ergots de retenue (36) en saillie vers le haut pour retenir un cadre de diapositive correspondant (18), sont réalisés sur les deux sections d'extrémité, éloignées l'une de l'autre, du fond (34) de chaque compartiment (16) pour réaliser les éléments de retenue (30) sur la base (14).

3. Chargeur de diapositives suivant la revendication 1, caractérisé en ce que l'élément de retenue (28) en forme de bande du côté supérieur s'étend centralement en direction longitudinale du chargeur de diapositives (10) et possède, en direction transversale du chargeur de diapositives (10), une largeur qui est petite par rapport à la dimension transversale du chargeur de diapositives (10).

4. Chargeur de diapositives suivant l'une des revendications précédentes, caractérisé en ce que chaque paroi de séparation (12) présente, à proximité de la base (14) du chargeur de diapositives (10), une dimension transversale correspondant à la base (14) et en ce qu'elle est amincie en direction de l'élément de retenue (28) en forme de bande du côté supérieur.
